# EUROPEAN PATENT APPLICATION

(11) **EP 4 552 958 A1**
(43) Date of publication of application: **14.05.2025**
(21) Application number: 24211662.2
(22) Date of filing: 08.11.2024
(51) Int. Cl.: B62H 3/06, B62H 3/12

(54) **BICYCLE STAND**

(30) Priority: 13.11.2023 NL 2036249
(71) Applicant: ROCK DOCK B.V., 9451 EC Rolde (NL)
(72) Inventor: Knol, Egbert, 6822 NG Arnhem (NL)
(74) Representative: 't Jong, Bastiaan Jacob

(57) **Abstract**

The invention relates to a bicycle stand for holding a bicycle, particularly a racing bike or mountain bike, in an upright position, which bicycle stand comprises:
- a wall plate configured to be mounted on a wall;
- an arm which is arranged with one end pivotally around a pivot axis on the wall plate;
- a first holder arranged on the other, free end of the arm, which first holder is a U-shaped bracket and is configured to grip round a tyre of a bicycle wheel, wherein the legs of the U-shape of the first holder extend toward the pivot axis.

## Description

The invention relates to a bicycle stand for holding a bicycle, particularly a racing bike or mountain bike, in an upright position.

Known bicycle stands are placed on the ground, and a bicycle can then be placed with a wheel in the stand. A stand generally known in the Netherlands is formed from two tubes which are arranged at a mutual distance and into which the bicycle wheel is placed. This known bracket is usually no higher than the hub axle of the wheel and the distance between the two tubes corresponds with a commonly used tyre size. Because this bicycle stand engages only on the lower part of the wheel, and thus has a low point of engagement, there is a risk of the wheel becoming damaged when the bicycle is not placed completely straight in the stand or is accidentally pushed over. This is the result of a large lever effect. The distance between the two tubes is furthermore too great for a wheel of a racing bike, or too narrow for a wheel of a mountain bike. A bicycle can further be placed only with a front wheel in such a bicycle stand because the wheel must be lifted up slightly, which is usually impractical with the rear wheel, or placing with the rear wheel is made impossible by the chain guard or vulnerable gears.

Also known are bicycle stands, for instance from KR 20140021461, KR 102253545 and KR 20110092085, which have a bracket which stands upright from the ground and in which the wheel is placed. The length of the bracket is greater than the diameter of the wheel, whereby the bracket also engages on the upper side of the wheel and so holds the bicycle more stably.

A drawback of such bicycle stands is that they are voluminous due to the long bracket and thereby take up a lot of space when there is no bicycle to hold upright. The applied technique and placement on/in the ground make these stands vulnerable to dirt and water. Earthworks will further have to be performed for placing such bicycle stands, this in order to anchor the stand in or onto the ground. This can be expensive, depending on the ground surface. It will further result in unevenness, this increasing the risk of tripping.

It is now an object of the invention to reduce or even obviate the above stated drawbacks.

This object is achieved according to the invention with a bicycle stand for holding a bicycle in an upright position, which bicycle stand comprises:
- a wall plate configured to be mounted on a wall;
- an arm which is arranged with one end pivotally around a pivot axis on the wall plate;
- a first holder arranged on the other, free end of the arm, which first holder is a U-shaped bracket and is configured to grip round a tyre of a bicycle wheel, wherein the legs of the U-shape of the first holder extend toward the pivot axis.

With the bicycle stand according to the invention a front wheel or rear wheel of a bicycle is held by the holder, which is arranged on the free end of the pivoting arm. The holder here lies on the bicycle wheel on the upper side and is held properly in contact with the bicycle wheel by the force of gravity, resulting in little to no clearance between the bicycle stand and the bicycle wheel. The point of engagement between the bicycle stand and the bicycle lies high up here, whereby the forces between the bicycle stand and the bicycle will be small. This makes the lever effect small.

The minimal clearance will keep the bicycle upright. This will result in the bicycle wheel experiencing little to no lateral loading. This ensures, particularly for lightweight bicycles such as racing bikes and mountain bikes with carbon rims, that the risk of damage to the rims is minimized.

Because the holder lies on the bicycle wheel, a bicycle can be placed both with the front wheel and with the rear wheel in the bicycle stand. This is because it is not necessary to lift a wheel.

When there is no bicycle to hold upright, the arm with the holder can be pivoted against the wall, whereby the bicycle stand according to the invention takes up almost no floor space. From this position the arm of the bicycle stand can also be brought back down again in simple manner, while the user holds the bicycle with one hand and so places the bicycle in the stand. It is not necessary to place the bicycle elsewhere first in order to prepare the bicycle stand for use.

A preferred embodiment of the bicycle stand according to the invention further comprises a second holder arranged on the arm between the pivot axis and the first holder, wherein the second holder is a U-shaped bracket and is configured to grip round a bicycle wheel, wherein the legs of the U-shape of the second holder extend toward the first holder.

With this embodiment the bicycle wheel can be held between the first and second holder. The bicycle wheel will hereby pivot away less easily in the first holder, which is advantageous particularly in the case of a front wheel, which is arranged in the frame of a bicycle for rotation around a steering shaft.

In a further preferred embodiment of the bicycle stand according to the invention the legs of the U-shape of the first holder and the legs of the U-shape of the second holder extend up to each other and so form a substantially rectangular bracket, and the arm coincides at least partially with this formed rectangular bracket.

A rectangular bracket can be produced easily and at low cost. The rectangular bracket is preferably made of plastic, so that a bicycle wheel cannot be easily damaged when the bicycle wheel is inserted into the rectangular bracket.

Another additional advantage of the bicycle stand being manufactured from plastic is that the plastic imparts flexibility and is thereby able to deform to some extent. This has the result that the chances of damage to the bicycle wheel when placed in the bicycle stand according to the invention are low to zero. Durability is a further advantage of plastic since, for outdoor use, there are no other materials that deform due to weather influences.

In another embodiment of the bicycle stand according to the invention a securing means is arranged on the wall plate, at a distance from the pivot axis, for the purpose of securing the arm substantially parallel to the wall plate.

With the securing means the arm can be secured against a wall in folded-up position, whereby the bicycle stand is as compact as possible and takes up hardly any or even no floor space when not in use.

The securing means is preferably a magnet which co-acts with a ferromagnetic element arranged in the arm. Owing to the magnet, the arm can be released and arranged on a bicycle wheel with one hand in simple manner, while the bicycle is held upright with the other hand.

In yet another embodiment of the bicycle stand according to the invention the legs of the U-shape of the first and second holder become wider, and are for instance stepped, in order to be able to grip round tyres of different thicknesses.

Because the legs of the U-shape of the two holders become wider, tyres with diverse widths can be gripped round by the holders. Giving the legs a stepped form enables for instance two specific widths to be held in the bicycle stand, such as for instance a narrow tyre of a racing bike and a wide tyre of a mountain bike.

The invention further relates to a combination of a bicycle stand according to the invention, a wall standing upright from the floor and a bicycle, wherein the bicycle stand is mounted with the wall plate on the wall, wherein the pivot axis is parallel to the floor and, relative to the floor, lies lower than a wheel axle of a wheel of the bicycle, and wherein the arm runs upward from the floor from the pivot axis.

Because the pivot axis lies lower than the wheel axle and the arm runs upward from the floor from the pivot axis, the first holder at the free end of the arm will always rest on top of the front or rear wheel of the bicycle. The first holder will here be held in contact with the tyre by the force of gravity, and the bicycle is held stably in an upright position.

The distance between the pivot axis and the first holder is preferably greater than the radius of the wheel and smaller than the diameter of the wheel. Hereby, the first holder will always rest on the tyre of the wheel and the first holder will be unable to slide between the wheel and the frame accidentally.

These and other features of the invention are further elucidated with reference to the accompanying drawings.
Figure 1 shows a perspective view of an embodiment of the combination according to the invention.
Figure 2 shows a perspective view with exploded parts of a first embodiment of the bicycle stand according to the invention.
Figure 3 shows a perspective view of a second embodiment of the bicycle stand according to the invention.

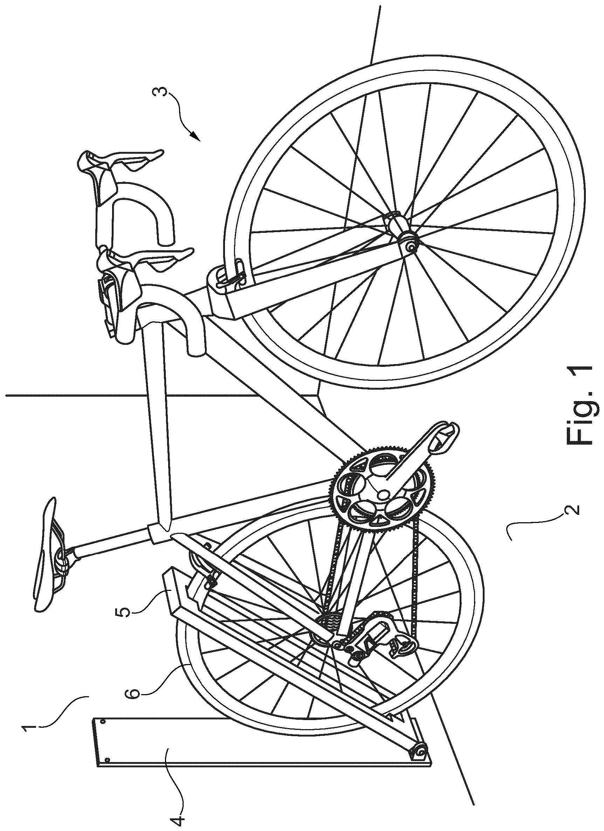

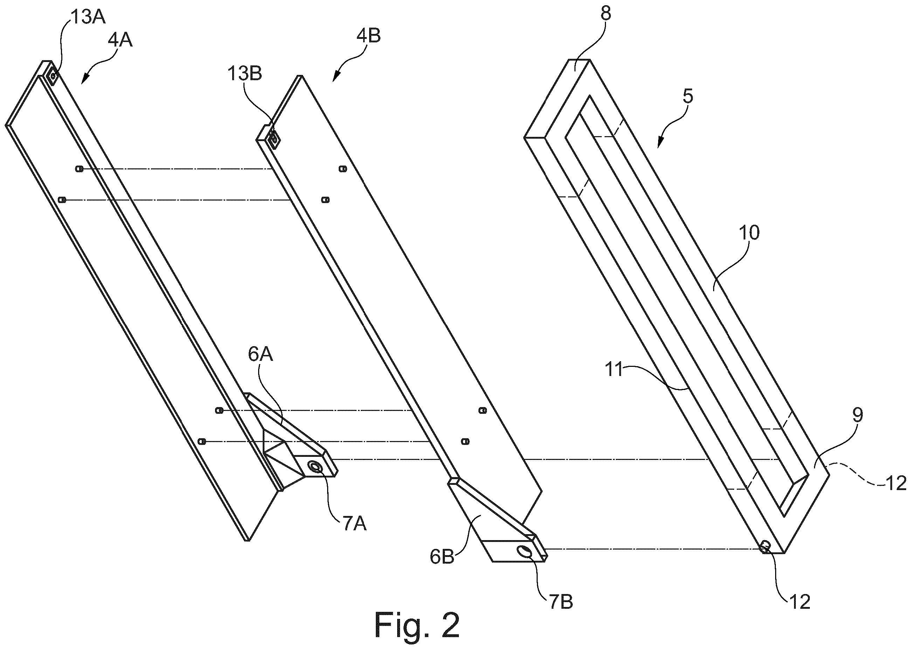

Figure 1 shows an embodiment of a combination according to the invention with a wall 1, a floor 2 on which a racing bike 3 is positioned. A bicycle stand (see also figure 2) is arranged on the wall 1 with a wall plate 4. Pivotally arranged on the wall plate 4 is a rectangular bracket 5 which grips round the rear wheel 6 and so holds bicycle 3 in an upright position.

Figure 2 shows a perspective view of a first embodiment of a bicycle stand 4, 5 as applied in the combination according to figure 1. Wall plate 4 is composed of a right-hand part 4A and a left-hand part 4B, which lie on each other in mounted state. The right-hand part 4A has an upright flange 6A with a pivot hole 7A and the left-hand part 4B has an upright flange 6B with a pivot hole 7B.

The rectangular bracket 5 is constructed from a first U-shaped bracket 8 and a second U-shaped bracket 9, wherein the legs of the two U-shapes are connected to each other by connecting parts 10, 11. The rectangular bracket 5 can be formed integrally, for instance by injection moulding. Arranged on either side of the second U-shaped bracket 9 are pivot pins 12, which fall into the pivot holes 7A and 7B in mounted state. In rectangular bracket 5 the arm with the first and second bracket 8, 9 thereon is integrated wholly into the rectangular bracket 5.

In the two wall plate parts 4A and 4B magnets 13A and 13B are arranged on the side opposite the respective pivot holes 7A and 7B. These magnets 13A and 13B co-act with metal parts embedded in bracket 8 and so hold the rectangular bracket 5 against the wall plate 4.

This embodiment is eminently suitable to be embodied in a plastic.

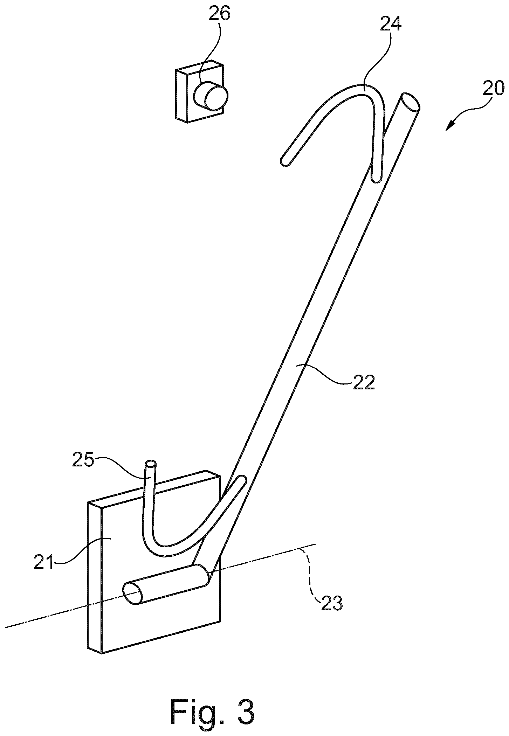

Figure 3 shows a second embodiment 20 of a bicycle stand according to the invention. The bicycle stand 20 has a wall plate 21 and an arm 22, which is arranged on the wall plate 21 for pivoting around a pivot axis 23. A first U-shaped bracket 24 is arranged on the free end of arm 22. The legs of the U-shape of bracket 24 are directed toward the pivot axis 23.

Further arranged between first bracket 24 and pivot axis 23 is a second U-shaped bracket 25. The legs of the U-shape of the second bracket 25 are directed toward the first bracket.

The legs of the two brackets 24, 25 both become wider so that the brackets 24, 25 can grip round front and rear tyres of different thicknesses.

The bicycle stand further has a magnetic securing means 26 which is mounted separately on the wall and is thus able to secure the arm 22 in a vertical position when the bicycle stand need not hold a bicycle upright.

## Claims

1. Bicycle stand for holding a bicycle, particularly a racing bike or mountain bike, or bicycles without front and rear mudguard, in an upright position, which bicycle stand comprises:
- a wall plate configured to be mounted on a wall;
- an arm which is arranged with one end pivotally around a pivot axis on the wall plate;
- a first holder arranged on the other, free end of the arm, which first holder is a U-shaped bracket and is configured to grip round a tyre of a bicycle wheel, wherein the legs of the U-shape of the first holder extend toward the pivot axis.

2. Bicycle stand according to claim 1, further comprising a second holder arranged on the arm between the pivot axis and the first holder, wherein the second holder is a U-shaped bracket and is configured to grip round a bicycle wheel, wherein the legs of the U-shape of the second holder extend toward the first holder.

3. Bicycle stand according to claim 2, wherein the legs of the U-shape of the first holder and the legs of the U-shape of the second holder extend up to each other and so form a substantially rectangular bracket, and wherein the arm coincides at least partially with this formed rectangular bracket.

4. Bicycle stand according to any one of the foregoing claims, wherein a securing means is arranged on the wall plate, at a distance from the pivot axis, for the purpose of securing the arm substantially parallel to the wall plate.

5. Bicycle stand according to claim 4, wherein the securing means is a magnet which co-acts with a ferromagnetic element arranged in the arm.

6. Bicycle stand according to any one of the foregoing claims, wherein the legs of the U-shape of the first and second holder become wider, for instance are stepped, in order to be able to grip round tyres of different thicknesses.

7. Combination of a bicycle stand according to any one of the foregoing claims, a wall standing upright from the floor and a bicycle, wherein the bicycle stand is mounted with the wall plate on the wall, wherein the pivot axis is parallel to the floor and, relative to the floor, lies lower than a wheel axle of a wheel of the bicycle, and wherein the arm runs upward from the floor from the pivot axis.

8. Combination according to claim 7, wherein the distance between the pivot axis and the first holder is greater than the radius of the wheel and smaller than the diameter of the wheel.
